# EUROPEAN PATENT SPECIFICATION

(11) **EP 0 475 418 B1**
(45) Date of publication and mention of the grant of the patent: **08.12.1999**
(21) Application number: 91115497.9
(22) Date of filing: 12.09.1991
(51) Int. Cl.: C08K 5/00, C08K 13/02

(54) **Self-extinguishing polymeric compositions**
Selbstverlöschende Polymerzusammensetzungen
Compositions polymériques auto-extinctrices

(30) Priority: 13.09.1990 IT 2145690
(43) Date of publication of application: 18.03.1992
(73) Proprietor: MINISTERO DELL' UNIVERSITA' E DELLA RICERCA SCIENTIFICA E TECNOLOGICA, 00196 Roma (IT)
(72) Inventor: Cipolli, Roberto, Dr., I-28100 Novara (IT); Nucida, Gilberto, I-20098 San Giuliano Milanese, Milan (IT); Masarati, Enrico, Dr., I-29010 Castelnuovo Valtidone, Piacenza (IT); Oriani, Roberto, I-20137 Milan (IT); Pirozzi, Mario, Dr., I-20097 San Donato Milanese, Milan (IT)
(74) Representative: Barz, Peter, Dr.

(56) References cited:
- EP-A- 0 115 871
- EP-A- 0 326 082
- EP-A- 0 415 371
- US-A- 3 810 862
- US-A- 4 727 102

## Description

The present invention relates to self-extinguishing polymeric compositions based on thermoplastic polymers and/or polymers endowed with elastomeric properties, especially olefinic polymers and copolymers, which compositions comprise specific triazine derivatives in combination with ammonium and/or amine phosphates and/or ammonium and/or amine phosphonates.

Several methods of reducing or eliminating the combustibility of polymers are known in the art. Some of said methods are based on the use of metal compounds, in particular on antimony, bismuth or arsenic, in combination with partially halogenated, thermally unstable organic compounds, such as chlorinated paraffin waxes.

Other methods are based on the use of substances capable of yielding intumescence. The formulations of the intumescent type generally are composed of the polymer and at least three main additives, i.e., an essentially phosphorus-containing additive, whose purpose is to form, during the combustion, an impermeable, semi-solid and vitreous layer essentially composed of polyphosphoric acid and to activate the process of formation of intumescence; a second additive, containing nitrogen, which is to serve as foaming agent; and a third, carbon-containing additive, which acts as a carbon donor in order to allow an insulting cellular carbonaceous layer ("char") to be formed between the polymer and the flame.

Examples of intumescent formulations of said type may be found in US-A-3,810,862 (Phillips Petroleum Co.; based on melamine, pentaerythritol and ammonium polyphosphate); US-A-4,727,102 (Vamp S.r.l.; based on melamine cyanurate, a hydroxyalkyl derivate of isocyanuric acid and ammonium polyphosphate); and WO-85/05626 (Plascoat U.K. Limited; on the basis of various phosphorus and nitrogen compounds among which, in particular, a combination of melamine phosphate, pentaerythritol and ammonium polyphosphate may be mentioned).

In more recent formulations, together with an organic or inorganic phosphorus compound, a nitrogen-containing organic compound was used, generally consisting of an aminoplastic resin obtained by means of condensation of urea, melamine or dicyandiamide with formaldehyde.

Examples of formulations containing two additives are those described in US-A-4,504,610 (Montedison S.p.A.; based on oligomeric derivatives of 1,3,5-triazine and ammonium polyphosphate) and EP-A-14,463 (Montedison S.p.A.; based on organic compounds selected from benzylguanamine and reaction products of aldehydes and several cyclic nitrogen compounds, in particular benzylguanamine-formaldehyde copolymers, and ammonium polyphosphate).

Self-extinguishing compositions can also be obtained by using single-component additives, which contain in their organic molecule both nitrogen and phosphorus atoms, as disclosed in US-A-4,201,705 (Borg-Warner Corp.).

These intumescent flame retardant systems endow the polymers to which they are added with the property of forming a carbonaceous residue when they burn or are exposed to a flame. This kind of flame-retardant system offers numerous advantages, i.e., absence of corrosion phenomena in the machinery in which the polymers are processed, a lower emission of smokes as compared to systems containing metal compounds and halogenated hydrocarbons, and, above all, the possibility of endowing the polymers with satisfactory flame-proof properties with a smaller amount of total additive and therefore without excessively impairing the mechanical properties thereof.

EP-A-115871 discloses self-extinguishing polymeric compositions comprising thermoplastic polymer, ammonium or amine phosphate and oligomeric 1,3,5-triazine derivatives similar to those described below and used according to the present invention with the exception that the 6-substituent on the triazine ring is a group R₁NH (R₁ = alkyl or cycloalkyl) or a N-heterocyclic radical.

EP-A-326082 discloses flame-retardant polypropylene resin compositions which in addition to polypropylene resin, polyammonium phosphate and a certain proportion of polyethylene resin comprise an oligomeric 1,3,5-triazine derivative similar to those described below with the exception that the 6-substituent on the triazine ring is a morpholino or piperidino group.

It has now surprisingly been found that polymeric compositions having very good anti-flame properties can be obtained by using certain oligomeric compounds derived from 2,4,6-triamino-1,3,5-triazine, the effectiveness of said oligomers being higher than that of prior art products.

Accordingly, the present invention provides compositions comprising based on 100 parts by weight of composition:
a) from 89 to 40 (preferably 84 to 50) parts by weight of thermoplastic polymer and/or of polymer having elastomeric properties;
b) from 8 to 33 (preferably 12 to 30) parts by weight of one or more ammonium and/or amine phosphates and/or phosphonates;
c) from 3 to 27 (preferably 4 to 20) parts by weight of one or more oligomeric compounds having 2 to 50 (and preferably 10 to 30) repeating units of general formula (I): 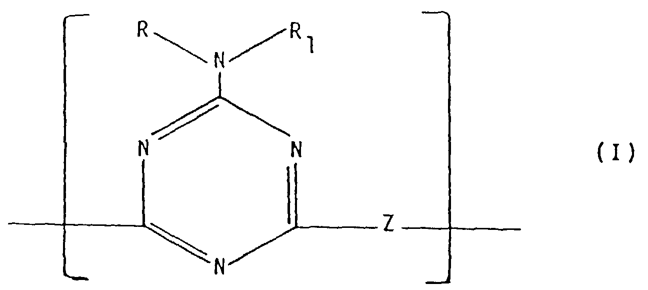 wherein:
   R is ⁅CₘH₂ₘ⁆O-R₂, m being an integer of from 2 to 8, preferably 2 to 4, and R₂ being selected from H; (C₁-C₈)-alkyl, (preferably (C₁-C₄)-alkyl); (C₂-C₈)-alkenyl;
   ⁅CₚH₂ₚ⁆O-R₃ wherein p is an integer of from 1 to 4 and R₃ is H or (C₁-C₄)-alkyl; (C₆-C₁₂)-cycloalkyl and (C₆-C₁₂)-alkylcycloalkyl;
   R₁ is H; (C₁-C₄)-alkyl or R;
   or R and R₁ are both hydrogen;
   Z is a divalent or polyvalent radical selected from those of the following formulae: 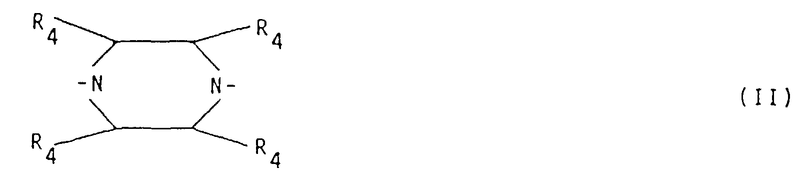 wherein the groups R₄, the same or different from each other, represent hydrogen or (C₁-C₄)-alkyl; 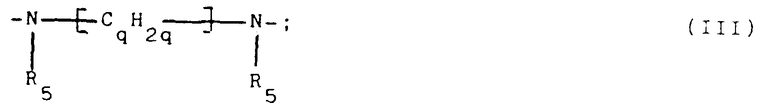 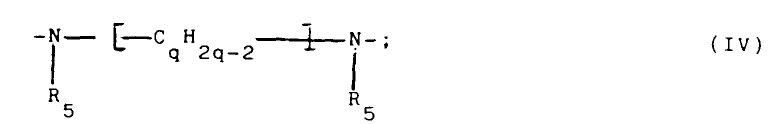 wherein q is an integer of from 2 to 14 and R₅ is hydrogen; (C₁-C₄)-alkyl; (C₂-C₆)-alkenyl; or (C₁-C₄)-hydroxyalkyl; 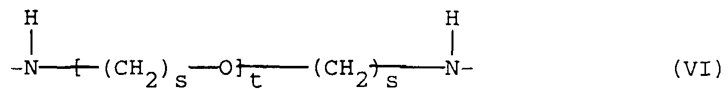 wherein s is an integer of from 2 to 5 and t is an integer of from 1 to 3; 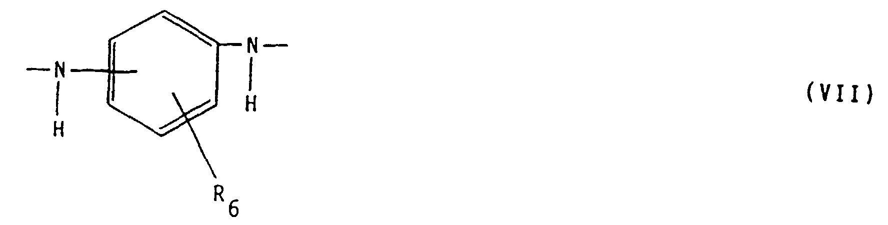 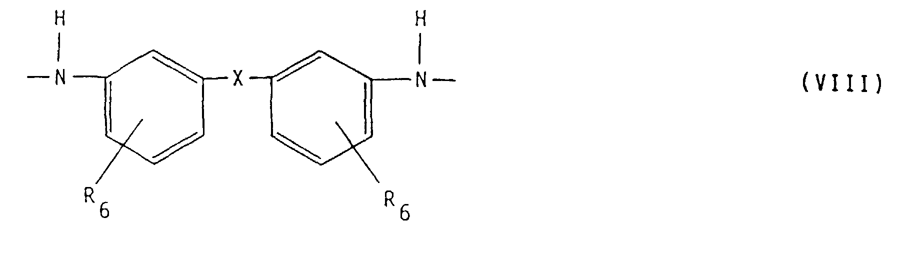 wherein:
      X is a direct carbon-carbon bond (C-C); O; S; S-S; SO; SO₂; NH; NHSO₂; NHCO; N=N; or CH₂; and
      R₆ is hydrogen; hydroxy; (C₁-C₄)-alkyl; or (C₁-C₄)-alkoxy; 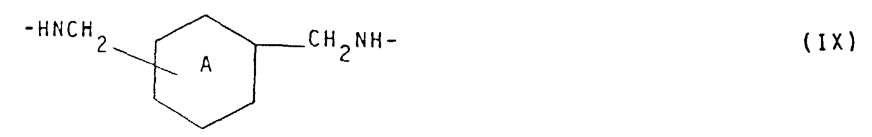 wherein A is a saturated or unsaturated (e.g. aromatic) ring; 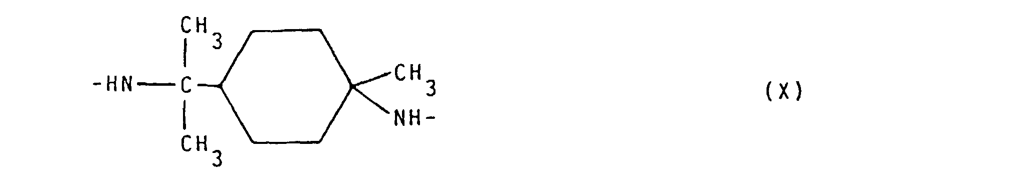 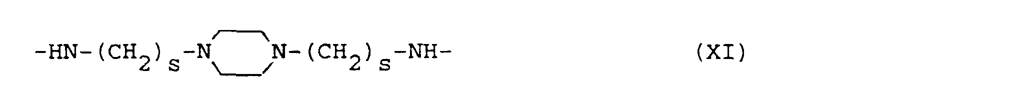 wherein s has the previously defined meaning; 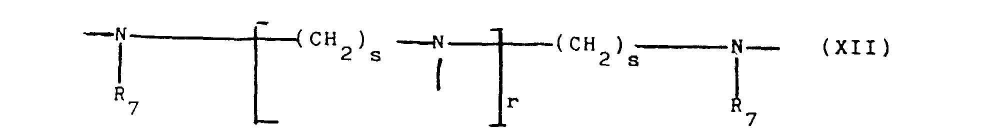 wherein R₇ is hydrogen or (C₁-C₄)-alkyl; r is an integer of from 1 to 5; and the subscripts s, the same or different from each other, have the previously defined meaning; 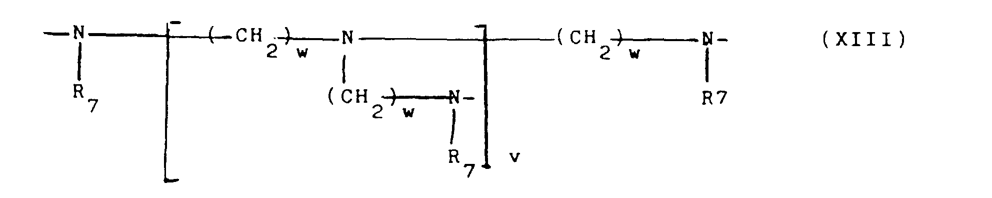 wherein:
         - R₇: has the previously defined meaning;
         - w: is an integer of from 2 to 4; and
         - v: is 1 or 2.

As already mentioned above, there are known in the art examples of formulations with two additives based on oligomeric derivatives of 2,4,6-triamino-1,3,5-triazine and ammonium polyphosphate (US-A-4,504,610) in comparison with which the compositions of the present invention show better antiflame properties, particularly in cases where said compositions comprise polymers such as polyethylene and ethylene copolymers.

In fact, although the compositions of the present invention generally show good antiflame properties when the groups R and R₁ in general formula (I) are equal to hydrogen, it has surprisingly been found that said compositions show very good antiflame properties when at least one of R and R₁ is a hydroxyalkyl or alkoxyalkyl radical as defined above and the polymer is preferably polyethylene and/or a copolymer of ethylene.

The advantages associated with the introduction of the hydroxyalkyl or alkoxyalkyl substituent have to be considered surprising in that analogous oligomeric derivatives wherein R and R₁ are alkyl groups even impair the self-extinguishing properties of polymeric compositions containing them.

The above oligomers having repeating units of general formula (I) are particularly stable to heat and therefore retain a high activity as flame retardants even after the heat processing of polymeric compositions containing them.

Furthermore, the compositions of the present invention show the advantage of emitting, in the case of a fire, only a very moderate amount of (non-darkening) smokes.

Specific examples of the group R in general formula (I) are 2-hydroxyethyl; 2-hydroxypropyl; 3-hydroxypropyl; 3-hydroxybutyl; 4-hydroxybutyl; 3-hydroxypentyl; 5-hydroxypentyl; 6-hydroxyhexyl; 3-hydroxy-2,5-dimethylhexyl; 7-hydroxyheptyl; 7-hydroxyoctyl; 2-methoxyethyl; 2-methoxypropyl; 3-methoxypropyl; 4-methoxybutyl; 6-methoxyhexyl; 7-methoxyheptyl; 7-methoxyoctyl; 2-ethoxyethyl; 3-ethoxypropyl; 4-ethoxybutyl; 3-propoxypropyl; 3-butoxypropyl; 4-butoxybutyl; 4-isobutoxybutyl; 5-propoxypentyl; 2-cyclohexyloxyethyl; 2-ethenyloxyethyl; 2-(2-hydroxyethoxy)ethyl; and 2-(2-methoxyethoxy)ethyl.

Specific examples of the group R₁ are, besides those given above for R, methyl, ethyl; propyl; isopropyl; butyl; isobutyl; and tert-butyl.

Specific examples of groups -Z- are those deriving from the removal of a hydrogen atom from each reacted amino group of the following compounds: piperazine; 2-methylpiperazine; 2,5-dimethylpiperazine; 2,3,5,6-tetramethylpiperazine; 2-ethylpiperazine; 2,5-diethylpiperazine; 1,2-diaminoethane; 1,3-diaminopropane; 1,4-diaminobutane; 1,5-diaminopentane; 1,6-diaminohexane; 1,8-diaminooctane; 1,10-diaminodecane; 1,12-diaminododecane; N,N'-dimethyl-1,2-diaminoethane; N-methyl-1,3-diaminopropane; N-ethyl-1,2-diaminoethane; N-isopropyl-1,2-diaminoethane; N-(2-hydroxyethyl)-1,2-diaminoethane; N,N'-bis(2-hydroxyethyl)-1,2-diaminoethane; N-(2-hydroxyethyl)-1,3-diaminopropane; N-hexenyl-1,6-diaminohexane; N,N'-diethyl-1,4-diamino-2-butene; 2,5-diamino-3-hexene; 1,2-bis(2-aminoethoxy)ethane; 1,3-diaminobenzene; 1,4-diaminobenzene; 2,4-diaminotoluene; 2,4-diaminoanisole; 2,4-diaminophenol; 4,4'-methylenedianiline; 4,4'-diaminobenzanilide; 1,3-bis(aminoethyl)benzene; 1,4-bis(aminoethyl)benzene; 1,3-bis(aminomethyl)cyclohexane; 1,8-diamino-p-menthane; 1,4-bis(2-aminoethyl)piperazine; 1,4-bis(3-aminopropyl)piperazine; 1,4-bis(4-aminobutyl)piperazine; 1,4-bis(5-aminopentyl) piperazine; bis (2-aminoethyl) amine; bis (3-aminopropyl)amine; bis(4-aminobutyl)amine; bis(5-aminopentyl)amine; bis[2-(N-methylamino)ethyl]amine; 2-N-butyl-bis(2-aminoethyl)-amine; bis[3-(N-methylamino)propyl]amine; N-(3-aminopropyl)-1,4-diaminobutane; N-(3-aminopropyl)-1,5-diaminopentane; N-(4-aminobutyl)-1,5-diaminopentane; tris(2-aminoethyl)amine; tris(3-aminopropyl)amine; tris(4-aminobutyl)amine; tris[2-(N-ethylamino)ethyl]amine; N,N'-bis(2-aminoethyl)-1,2-diaminoethane; N,N'-bis(3-aminopropyl)-1,3-diaminopropane; N,N'-bis(2-aminoethyl)-1,3-diaminopropane, N,N'-bis(3-aminopropyl)-1,2-diaminoethane;N,N'-bis(3-aminopropyl)-1,4-diaminobutane; bis[2-(2-aminoethyl)aminoethyl]amine; N,N'-bis[2-(2-aminoethyl)aminoethyl]-1,2-diaminoethane; N,N'-bis[3-(2-amino-ethyl)aminopropyl]-1,2-diaminoethane; and N,N,N',N'-tetrakis(2-aminoethyl)-1,2-diaminoethane.

Particularly preferred are units of general formula (I) wherein R₁ is hydrogen.

Oligomeric compounds having n repeating units covered by general formula (I) which are not specified in the examples, but are equally advantageously useable in the self-extinguishing polymeric compositions of the present invention are those listed in Table 1 below.

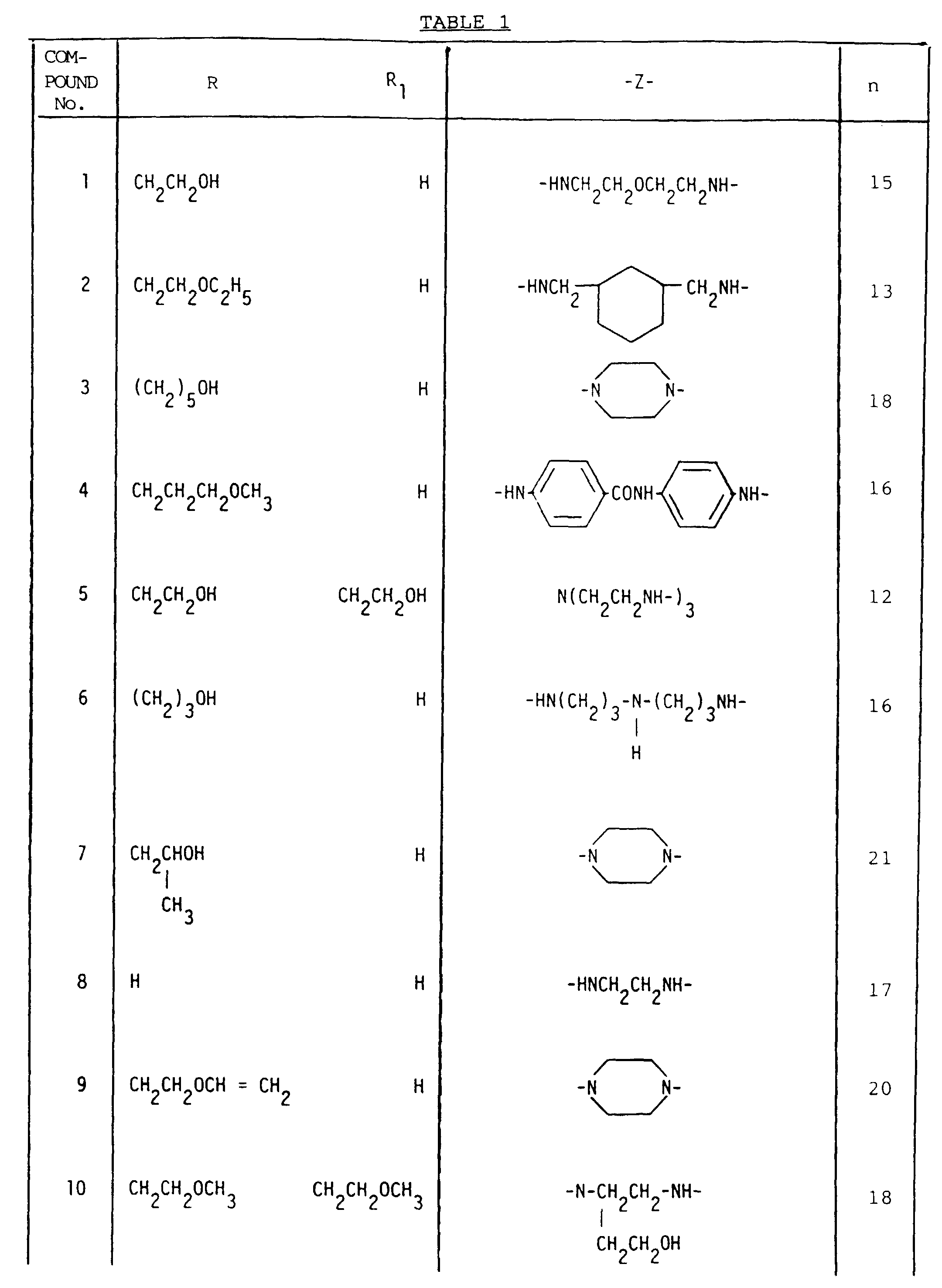

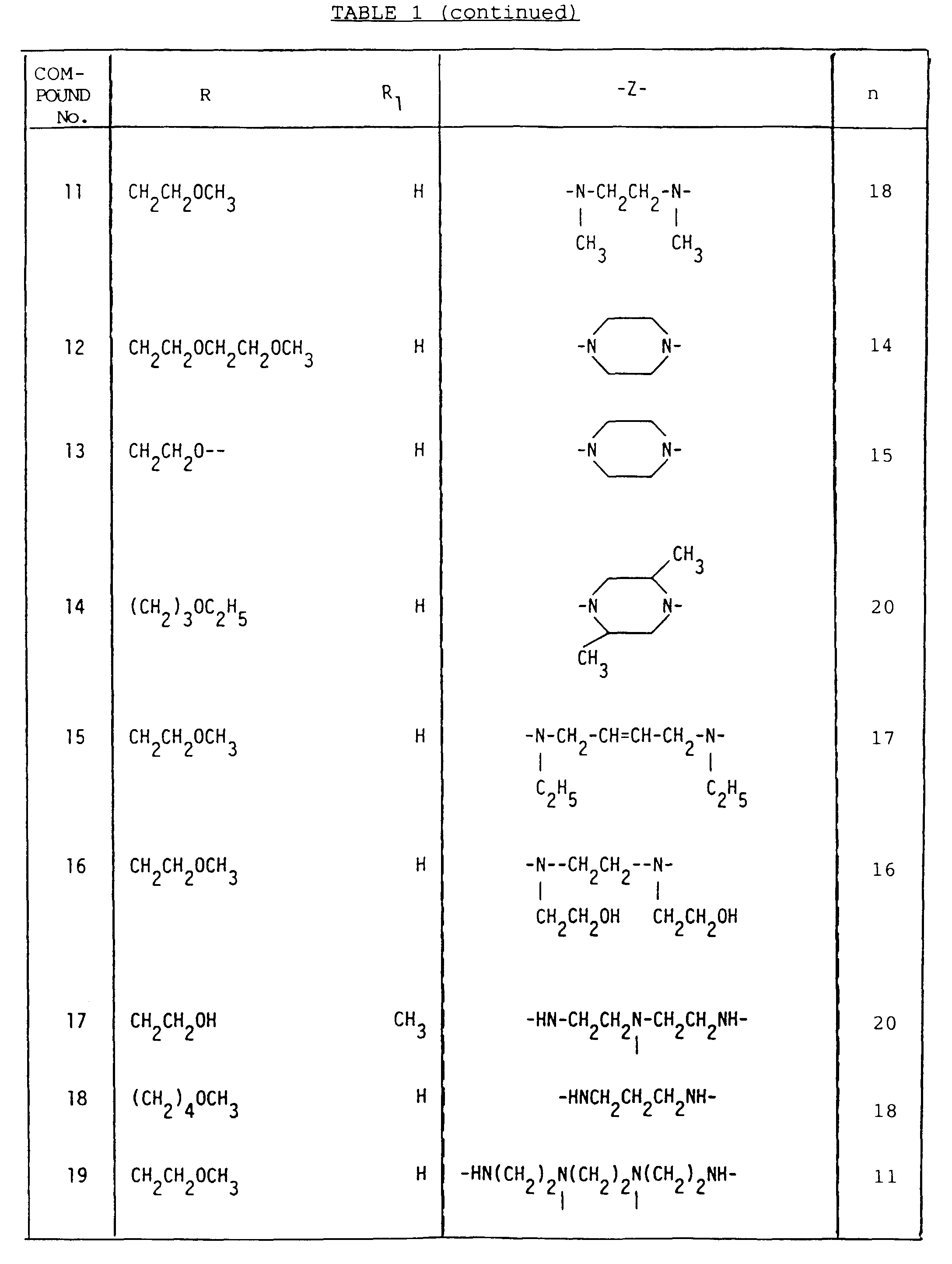

Oligomers having repeating units of general formula (I) can be prepared by reacting a cyanuric acid halide, for instance the chloride, at a temperature of from 0 to 10°C and at a pH of from 5 to 7, in a suitable solvent (such as acetone, water, methylene chloride, etc.) with an amine of general formula (XIV): 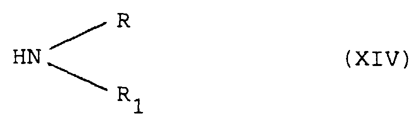 wherein R and R₁ have the previously defined meanings; in the presence or absence (depending on the molar ratio used) of an acidity acceptor (such as NaOH, NaHCO₃, Na₂CO₃ or triethylamine), thereby obtaining the intermediate of general formula (XV):

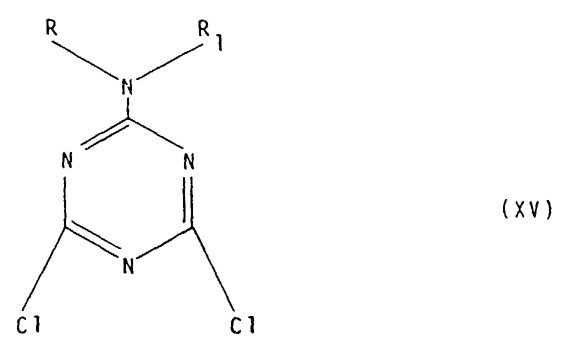

This derivaitve, either separated or not, is subsequently allowed to react under conditions analogous to the preceding ones but at a temperature of from 70 to 150°C and using a solvent compatible with such temperatures (such as water, toluene, xylene, acetonitrile, etc.) with a polyamine of general formula (XVI):

H-Z-H (XVI)

wherein Z is a radical having one of the above general formulae (II) to (XIII); in the presence of an acidity acceptor.

The most suitable molar ratio of intermediate (XV) to polyamine (XVI) ranges from 1:1 (for linear oligomers) to a maximum of 3.5:1 (for branched oligomers).

An alternative method comprises the reaction of a cyanuric acid halide, for instance the chloride, with a polyamine of general formula (XVI) above, in a suitable molar ratio and always under conditions analogous to those described previously, but at a temperature of from 0 to 60°C, to yield the intermediate having repeating units of general formula (XVII): 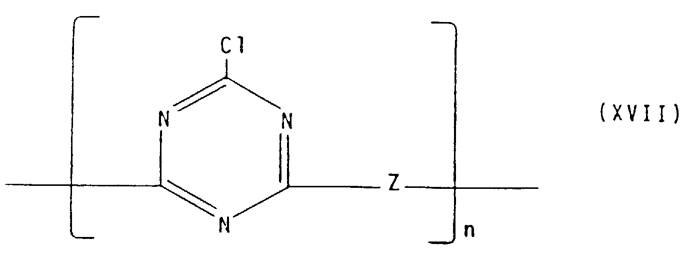 wherein Z is as defined above.

This intermediate, either separated or not, is allowed to react at a temperature of from 80 to 150°C and under conditions analogous to the preceding ones, with an amine of general formula (XIV).

Among the phosphates, ammonium polyphosphates of the general formula

(NH₄)ₙ₊₂PₙO₃ₙ₊₁

wherein n is an integer equal to, or greater than, 2, are preferred. The molecular weight of the polyphosphates should be high enough to secure a low solubility in water.

For exemplary purposes, n preferably is comprised within the range of from 2 to 500.

The composition of the polyphosphates having the formula indicated hereinabove, in which n is a high enough number, and preferably ranges from 5 to 500, practically corresponds to a metaphosphate of formula

(NH₄PO₃)ₙ.

An example of said polyphosphates is the product known under the trade name "Exolit® 422" (Hoechst), having the composition (NH₄PO₃)ₙ in which n is greater than 50. Another example is the product known under the name "Phos-Chek® P/30" (Monsanto Chemical) which has a similar composition.

Another polyphosphate which can be used advantageously, above all thanks to its low solubility in water, is the product known under the trade name "Exolit® 462" (Hoechst) which is "Exolit® 422" microencapsulated in melamine-formaldehyde resin.

Other phosphates which can be used are those which are derived from amines, such as, e.g., dimethyl ammonium phosphate or diethyl ammonium phosphate, ethylene diamine phosphate, melamine orthophosphate or melamine pyrophosphate.

Good results may also be obtained by using mono- or polyammonium phosphonates selected from the salts derived from mono- or polyphosphonic acids.

Examples of said acids are:
ethane-1,1,2-triphosphonic acid, 2-hydroxy-ethane-1,1,2-triphosphonic acid, propane-1,2,3-triphosphonic acid, methylphosphonic acid, ethylphosphonic acid, n-propylphosphonic acid, n-butylphosphonic acid, phenylphosphonic acid, 1-amino-ethane-1,1-diphosphonic acid, 1-hydroxy-ethane-1,1-diphosphonic acid, 1-hydroxy-dodecane-1,1-diphosphonic acid, phosphonoacetic acid, 2-phosphonopropionic acid, 3-phosphonopropionic acid, 2-phosphonobutyric acid, 4-phosphonobutyric acid, amine tri(methylenephosphonic) acid, ethylenediamine tetra(methylenephosphonic) acid, hexamethylene diamine tetra(methylenephosphonic) acid and diethylene triamine penta(methylenephosphonic) acid.

Among the polymers which can be used in the compositions according to the present invention, preferred are polymers and copolymers of olefins of general formula

R' - CH = CH₂

wherein R' is hydrogen or a (C₁₋₈)-alkyl or (C₆₋₁₀)-aryl radical, in particular:
(1) isotactic or prevailingly isotactic polypropylene;
(2) HDPE, LLDPE and LDPE polyethylene;
(3) crystalline copolymers of propylene and minor amounts of ethylene and/or of other alpha-olefins, such as, e.g., 1-butene, 1-hexene, 1-octene, 4-methyl-1-pentene;
(4) heterophasic compositions comprising (A) a fraction constituted by a propylene or ethylene homopolymer, or by one of the copolymers defined under (3); and (B) a copolymeric fraction constituted by elastomeric copolymers of ethylene and an alpha-olefin, optionally containing minor proportions of one or more dienes, wherein the alpha-olefin is preferably selected from propylene and 1-butene; and
(5) elastomeric copolymers of ethylene and alpha-olefin(s), optionally containing minor proportions of one or more dienes.

Examples of dienes more commonly contained in said elastomeric copolymers are butadiene, ethylidene-norbornene and hexadiene-1,4.

Among the polymers of olefins of general formula R'-CH=CH₂ wherein R' is an aryl radical, "crystal" and impact-resistant polystyrene are preferred.

Other examples of polymers which can be used are acrylonitrile/butadiene/styrene terpolymers (ABS); styrene/acrylonitrile copolymers (SAN) ; polyurethanes (of polyester or polyether grade); poly(ethylene terephthalate); poly(butylene terephthalate); and polyamides.

The self-extinguishing compositions according to the present invention can be prepared according to methods known in the art. For example, ammonium and/or amine phosphate and/or phosphonate is first intimately mixed with one or more finely ground nitrogen-containing compounds having units of general formula (I) (the particles of which generally are smaller than 70 µm) and the thus obtained mixture is added to the polymer in a turbo-mixer, in order to generate a homogeneous mixture which is either extruded or granulated. The thus obtained granular product can be transformed into various finished articles according to any of the well-known moulding techniques.

The fire-retardant additives according to the present invention are also suitable for use in the field of flame-retardant paints.

The following non-limitative examples are to further illustrate the present invention.

### EXAMPLE 1

184.5 g of cyanuric acid chloride and 700 ml of water are placed in a 2 l-reactor equipped with stirrer, thermometer, feeding funnel, condenser and cooling bath.

While cooling from the outside, 75 g of 2-methoxyethylamine and 40 g of sodium hydroxide dissolved in 100 ml of water are added simultaneously, within 3 hours, keeping the pH at from 5 to 7 and the temperature at from 0 to 3°C.

The whole mass is kept at 0-3°C for a further 2 hours and then the product formed is filtered and washed on the filter with water.

By drying the cake in an oven at 50°C under vacuum, 197.4 g of the intermediate of formula (XVIII): 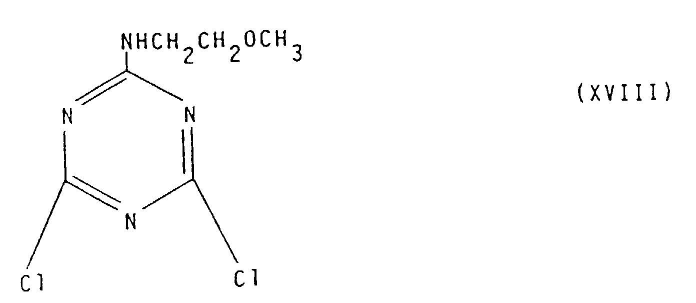 are obtained in the form of a white crystalline powder; melting point (m.p.) = 73-75°C and chlorine content 31.68% (theor.: 31.84%).

The structure of the intermediate was confirmed by NMR analysis.

800 ml of xylene, 50 ml of water and 100 g of the intermediate (XVIII) are placed in the above 2 l-reactor, this time provided with heating bath, and thereafter 26.9 g of ethylenediamine are added under stirring within 20 minutes.

The temperature of the dispersion rises up to 60-65°C; by means of the external bath it is further raised to 75°C and stirring is continued for about 1 hour.

Thereafter, 17.5 g of sodium hydroxide dissolved in 40 ml of water are added within 2 hours and at 75°C.

The temperature is raised to 95°C and the mixture is maintained at this temperature for 2 hours under stirring.

Subsequently, within about 2 hours, 18.4 g of sodium hydroxide dissolved in 40 ml of water are added.

The temperature is gradually raised by azeotropically removing the water, until the boiling temperature of the solvent is reached.

After having been kept under reflux for 10 hours, the mass is cooled to room temperature and the product obtained is filtered.

The filter cake is rinsed and then is thoroughly washed with water.

After drying in an oven at 100°C, 84.9 g of the product of formula 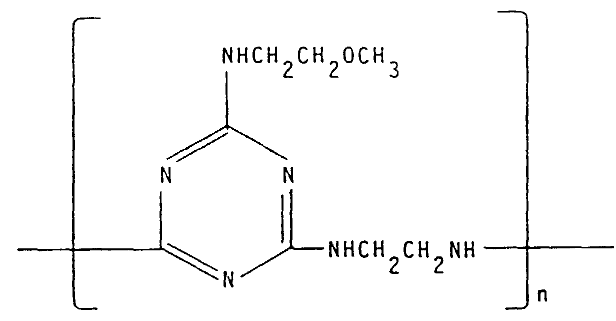 are obtained in the form of a white crystalline powder; m.p. = 182-186°C and n = 20.

### EXAMPLE 2

800 ml of water and 184.5 g of cyanuric acid chloride are introduced in the 2 l-reactor described in example 1.

Following the procedure described in example 1, 133 g of bis(2-methoxyethylamine) are placed in the reactor.

By further working according to the modalities described in example 1, 260.8 g of the intermediate of formula (XIX): 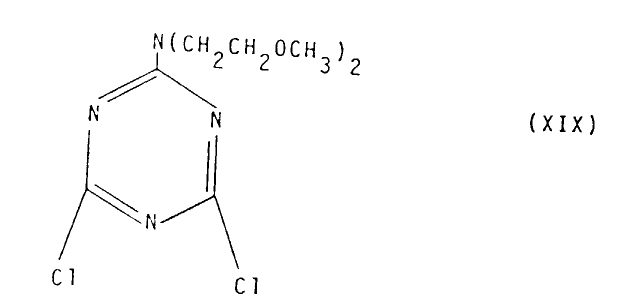 are obtained in the form of a white crystalline powder; m.p. = 62-65°C; chlorine content 25.08% (theor.: 25.27%).

The structure of the intermediate (XIX) was confirmed by the NMR analysis.

In the same 2 1-reactor as used in example 1 there are introduced 800 ml of xylene, 50 ml of water, 135 g of the intermediate (XIX) and, finally, 41.3 g of piperazine, within 15 minutes and with stirring.

The temperature of the suspension rises to 40-45°C.

By working according to the modalities described in example 1 (in this case using 38 g of sodium hydroxide ) 136.4 g of the product of formula 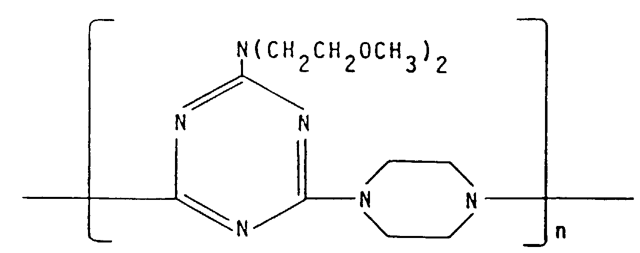 with n = 18 are obtained in the form of a white crystalline powder having a m.p. of >300°C.

### EXAMPLE 3

400 ml of acetone and 100 g of cyanuric acid chloride are introduced in the 2 1-reactor used in example 1.

The suspension is cooled to 0-5°C and within 1 hour 23.4 g of piperazine are added.

Still at 0-5°C 23.3 g of piperazine and 10.8 g of sodium hydroxide dissolved in 50 ml of water are added simultaneously within 2 hours and in such a way as to maintain the pH at about 3.

The temperature is raised to 20°C and, within about 2 hours, 10.8 g of sodium hydroxide dissolved in 50 ml of water are introduced in such a way as to keep the pH at about 5.

The temperature is gradually raised from 20 to 60°C while adding, wthin about 2 hours, a solution of 21.8 g of sodium hydroxide in 100 ml of water.

The resulting mixture is stirred for another 2 hours and then is cooled to room temperature whereafter the product formed is filtered and washed on the filter with water.

Upon drying the cake in an oven at 100°C, 104.9 g of the intermediate of formula (XX): 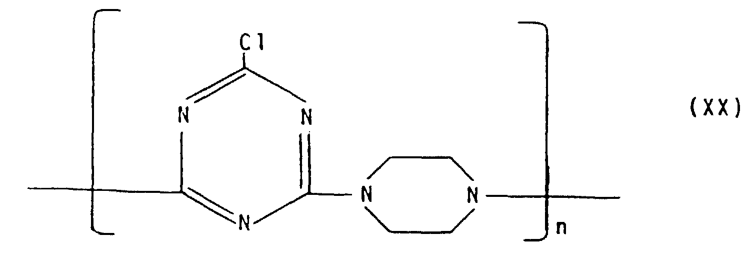 with n = 15 are obtained in the form of a white crystalline powder; m.p. >300°C and chlorine content 17.7% (theor.: 17.94%).

The structure of the intermediate was confirmed by IR spectroscopic analysis.

In a 1 l-reactor, equipped with stirrer, thermometer, feeding funnel, condenser and heating bath, there are introduced 450 ml of ortho-dichlorobenzene, 49.4 g of the intermediate (XX) and 30.5 g of 2-hydroxyethylamine.

The mass is heated to 140°C and is stirred at this temperature for 24 hours, whereafter it is cooled to room temperature and the product formed is filtered.

The cake is rinsed well and thoroughly washed with water.

After drying in an oven at 100°C, 54.2 g of the product of formula 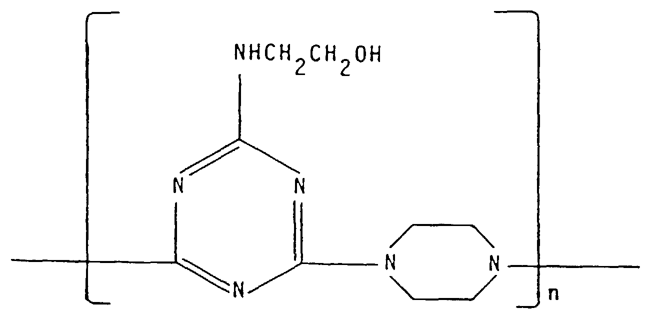 with n = 15 are obtained in the form of a white crystalline powder having a m.p. of >300°C.

### EXAMPLE 4

800 ml of xylene, 100 g of the intermediate (XVIII), 38.6 g of piperazine and 35.9 g of sodium hydroxide are placed in a 2 1-reactor equipped as described in example 1.

The mass is heated to boiling and is maintained under reflux for 24 hours, whereafter it is cooled to room temperature and the product formed is filtered and thoroughly washed on the filter with water.

By drying the filter cake, 100.8 g of the product of formula 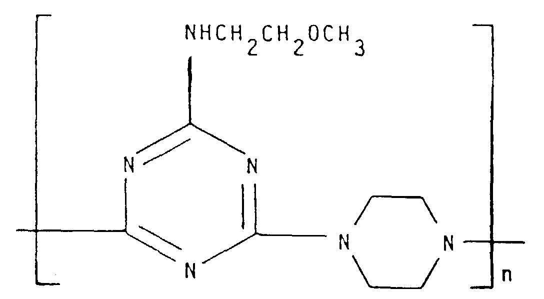 with n = 16 are obtained in the form of white crystalline powder having a m.p. of >300°C.

### EXAMPLE 5

In a 1 l-reactor equipped as described in example 1 there are introduced 350 ml of xylene, 30 ml of water, 66.9 g of the intermediate (XVIII) and, with stirring and within about 15 minutes, 30.9 g of diethylenetriamine.

The temperature of the mass rises to 50°C.

By subsequently working according to the procedure described in example 1 (in this case using 24 g of sodium hydroxide), 72.8 g of the product of formula 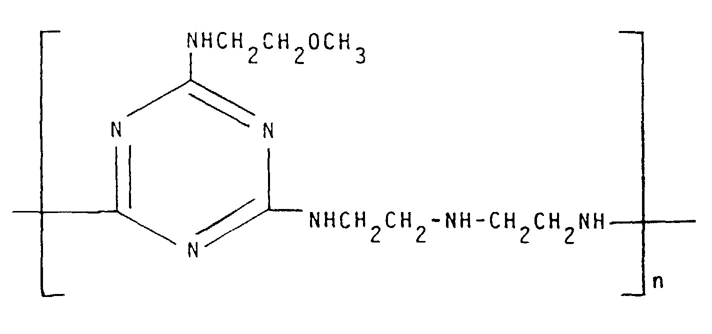 with n = 18 are obtained in the form of a white crystalline powder having a m.p. of >300°C.

### EXAMPLE 6

In a 2-l steel reactor 800 ml of water, 250 g of a 30% by weight aqueous ammonia solution and 200 g of the intermediate (XX) are introduced.

The resulting mixture is heated to 150°C and is maintained at this temperature for 12 hours.

After cooling to room temperature, the product formed is filtered and washed on the filter with water.

By drying the filter cake in an oven at 100°C, 174.2 g of the product of formula 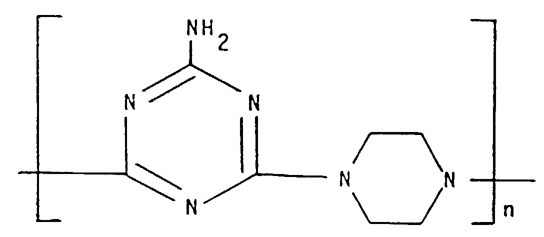 with n = 15 are obtained in the form of white crystalline powder having a m.p. of >300°C.

### EXAMPLES 7 TO 14

By working under conditions analogous to those described in examples 1 to 6 the products having repeating units of general formula (I) reported in Table 2 below are prepared (n being the number of repeating units).

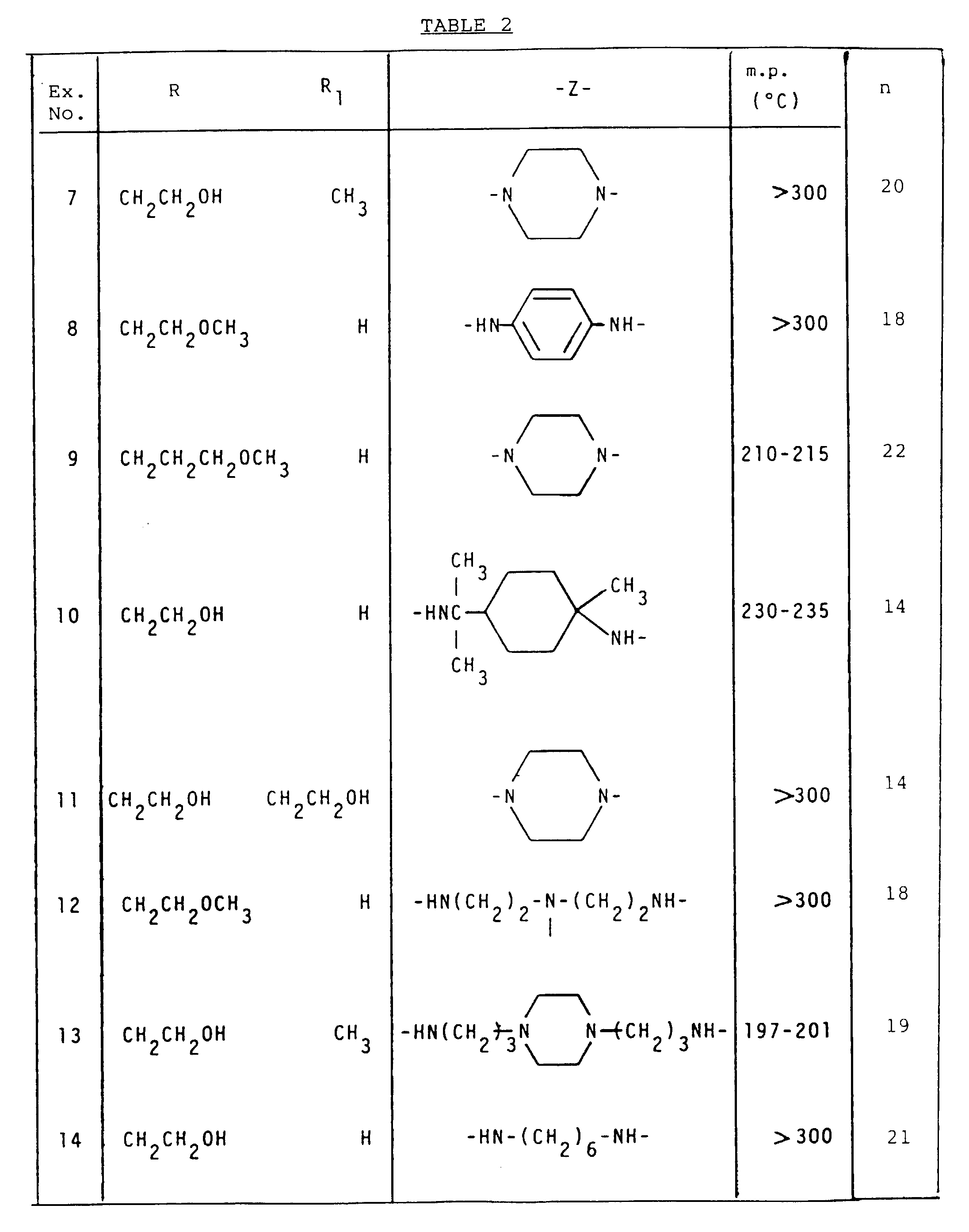

### EXAMPLES 15 TO 51

The tests reported in the following Tables 3 and 4 relate to polymeric compositions containing the products of general formula (I) prepared according to the preceding examples.

Specimen having the shape of small slabs of about 3 mm of thickness were prepared by moulding mixtures of granular polymer and additives on a MOORE platen press, with a moulding cycle of 7 minutes and a moulding pressure of about 40 kg/cm².

On the slab specimen thus obtained the level of self-extinguishment was determined by measuring the oxygen index (L.O.I. according to ASTM D-2863-77 in a Stanton Redcroft instrument) and by applying the "Vertical Burning Test" which makes it possible to classify the material according to three rating levels (94 V-O, 94 V-1 and 94 V-2) according to the UL 94 standard (issued by Underwriters Laboratories - U.S.A.).

In Table 3 the values which were obtained by using an isotactic polypropylene in flake form and having a melt flow index of 12 and an insoluble fraction in boiling n-heptane of 96% by weight are reported.

In Table 4 there are reported the values which were obtained by using low-density polyethylene in granular form with a melt flow index of 7; polystyrene granules containing 5% by weight of butadiene rubber and having a melt flow index of 9; thermoplastic polyurethane granules, of polyester grade (ESTANE 54600® by Goodrich) or of polyether grade (ESTANE 58300® by Goodrich), having respective specific gravities of 1.19 and 1.10 g/cm³; an ethylene-propylene elastomeric copolymer containing 45% by weight of propylene; and an acrylonitrile-butadiene-styrene terpolymer having a specific gravity of 1.06 g/cm³ and a melt flow index of 1.6, and containing about 40% of each acrylonitrile and styrene and 20% of butadiene.

**TABLE 3**

| Example No. | Product No. | Parts by Weight | | | | L.O.I. (ASTM D2863) | UL 94 3 mm |
|---|---|---|---|---|---|---|---|
| | | Product | PP (1) | AO (2) | APP (1) | | |
| 15 | 1 | 6.0 | 75 | 1 | 18.0 | 32.5 | V0 |
| 16 | 2 | 5.3 | 75 | 1 | 18.7 | 33.4 | V0 |
| 17 | 2 | 8.5 | 65 | 1 | 25.5 | 43.0 | V0 |
| 18 | 3 | 5.0 | 74 | 1 | 20.0 | 32.8 | V0 |
| 19 | 4 | 4.0 | 77 | 1 | 18.0 | 33.2 | V0 |
| | | | | | | | |
| 20 | 4 | 12.0 | 75 | 1 | 12.0 | 30.9 | V0 |
| 21 | 5 | 6.0 | 75 | 1 | 18.0 | 32.8 | V0 |
| 22 | 6 | 6.0 | 75 | 1 | 18.0 | 33.7 | V0 |
| 23 | 7 | 6.0 | 75 | 1 | 18.0 | 36.0 | V0 |
| 24 | 8 | 6.5 | 73 | 1 | 19.5 | 32.9 | V0 |
| 25 | 9 | 9.6 | 75 | 1 | 14.4 | 34.6 | V0 |
| 26 | 10 | 6.7 | 72 | 1 | 20.3 | 33.9 | V0 |
| 27 | 11 | 6.0 | 75 | 1 | 18.0 | 35.7 | V0 |
| 28 | 12 | 6.0 | 75 | 1 | 18.0 | 32.4 | V0 |
| 29 | 13 | 6.0 | 75 | 1 | 18.0 | 32.6 | V0 |
| | | | | | | | |
| 30 | 14 | 5.8 | 73 | 1 | 20.2 | 36.1 | V0 |
| 31 | 4 | 6.0 | 75 | 1 | 18.0* | 33.5 | V0 |
| 32 | 9 | 8.5 | 65 | 1 | 25.5* | 43.0 | V0 |
| 33 | 1 | 6.0 | 75 | 1 | 18.0⁽³⁾ | 31.7 | V0 |
| 34 | 6 | 5.0 | 74 | 1 | 20.0⁽⁴⁾ | 30.9 | V0 |
| 35 | 2 | 6.0 | 75 | 1 | 18.0⁽⁵⁾ | 31.3 | V0 |
| 36 | 4 | 5.2 | 73 | 1 | 20.8⁽³⁾ | 32.2 | V0 |

| | | | | | | | |
|---|---|---|---|---|---|---|---|
| (1) PP = polypropylene APP = Ammonium polyphosphate- Exolit® 422 (Hoechst) | | | | | | | |
| * APP = ammonium polyphosphate microincapsulated with melamine-formaldehyde resin Exolit® 462 (Hoechst) | | | | | | | |
| (2) AO = antioxidant Mixture of 2 parts of dilauryl thiopropionate and 1 part of pentaerythritol tetra [3-(3,5-di-tert-butyl-4-hydroxyphenyl)propionate] | | | | | | | |
| (3) monoammonium salt of 1-aminoethane-1,1-diphosphonic acid | | | | | | | |
| (4) bisammonium salt of 1-aminoethane-1,1-diphosphonic acid | | | | | | | |
| (5) monoammonium salt of 1-hydroxyethane-1,1-diphosphonic acid | | | | | | | |

**TABLE 4**

| Ex. No. | Supp. Polymer (2) | Product example No. | Parts by Weight | | | | L.O.I. | |
|---|---|---|---|---|---|---|---|---|
| | | | Product | Polymer | A0 (3) | APP (1) | (ASTM-D2863) | UL94 3 mm |
| 37 | L | 2 | 7.8 | 68 | 1 | 23.2 | 32.4 | V0 |
| 38 | D | 3 | 7.6 | 65 | 1 | 26.4 | 36.2 | V0 |
| 39 | P | 4 | 7.5 | 70 | 1 | 21.5 | 37.8 | V0 |
| 40 | E | 4 | 7.8 | 60 | 1 | 31.2 | 45.2 | V0 |
| 41 | | 9 | 7.5 | 69 | 1 | 22.5 | 35.9 | V0 |
| 42 | H | 1 | 20.0 | 60 | 1 | 19.0 | 34.6 | V0 |
| 43 | I | 4 | 8.7 | 60 | 1 | 30.3 | 33.0 | V0 |
| 44 | P | 9 | 9.8 | 60 | 1 | 29.2 | 35.5 | V0 |
| 45 | S | 12 | 10.5 | 62 | 1 | 26.5 | 32.5 | V0 |
| 46 | PU | 4 | 5.8 | 70 | 1 | 23.2 | 35.0 | V0 |
| 47 | (ester) | 9 | 5.8 | 70 | 1 | 23.2 | 35.0 | V0 |
| 48 | PU (ether) | 1 | 6.4 | 70 | 1 | 22.6 | 33.2 | V0 |
| 49 | PP/PE | 4 | 5.8 | 70 | 1 | 23.2 | 33.5 | V0 |
| 50 | | 11 | 7.3 | 70 | 1 | 21.7 | 34.1 | V0 |
| 51 | ABS | 9 | 8.5 | 65 | 1 | 25.5 | 33.2 | V0 |

| | | | | | | | | |
|---|---|---|---|---|---|---|---|---|
| (1) APP = Ammonium polyphosphate- Exolit® 422 (Hoechst) | | | | | | | | |
| (2) LPDE = low density polyethylene HIPS = polystyrene containing 5% of butadiene rubber PU (ester) = polyurethane polyester PU (ether) = polyurethane polyether PP/PE = propylene-ethylene copolymer ABS = acrylonitrile-butadiene-styrene terpolymer | | | | | | | | |
| (3) AO = antioxidant Mixture of 2 parts of dilauryl thiopropionate and 1 part of pentaerythritol tetra[3-(3,5-di-tert-butyl-4-hydroxyphenyl)propionate] | | | | | | | | |

### EXAMPLE 52 (Comparison)

By working according to the modalities of examples 15 to 36, but using as nitrogen-containing compound a product having 20 repeating units of general formula (I) wherein R and R1 are ethyl, and Z is piperazyl, the composition specified below is prepared:

| | |
|---|---|
| Polypropylene | 75 parts by weight |
| Antioxidant | 1 part by weight |
| Nitrogen-containing compound | 6 parts by weight |
| Ammonium polyphosphate | 18 parts by weight. |

Using the composition specified above specimens are prepared which are subjected to self-extinguishing tests according to the modalities described above.

The following results are obtained:
L.O.I. = 29.8
UL 94 (3 mm): class B (the specimen burns).

## Claims

1. Self-extinguishing polymeric compositions comprising based on 100 parts by weight of composition:
a) from 89 to 40 parts by weight of thermoplastic polymer and/or of polymer having elastomeric properties;
b) from 8 to 33 parts by weight of one or more ammonium and/or amine phosphates and/or phosphonates;
c) from 3 to 27 parts by weight of one or more oligomeric 2,4,6-triamino-1,3,5-triazine derivatives having 2 to 50 repeating units of general formula (I): 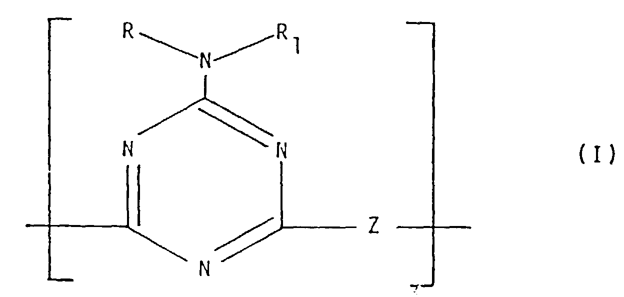 wherein:
R is ⁅CₘH₂ₘ⁆O-R₂, m being an integer of from 2 to 8 and R₂ being selected from H; (C₁-C₈)-alkyl, (C₂-C₈)-alkenyl; ⁅CₚH₂ₚ⁆O-R₃ wherein p is an integer of from 1 to 4 and R₃ is H or (C₁-C₄)-alkyl; (C₆-C₁₂)-cycloalkyl and (C₆-C₁₂)-alkylcycloalkyl;
R₁ is H; (C₁-C₄)-alkyl or R;
or R and R₁ are both hydrogen;
Z is a divalent or polyvalent radical selected from those of the following formulae: 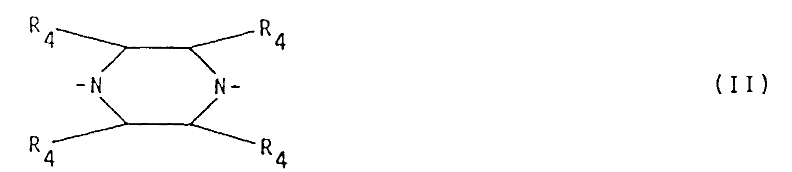 wherein the groups R₄, the same or different from each other, represent hydrogen and (C₁-C₄)-alkyl; 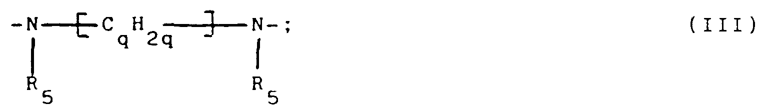 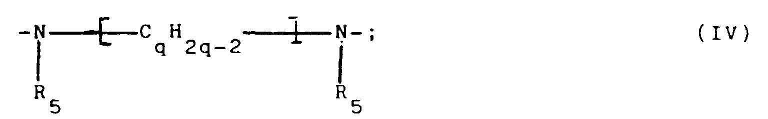 wherein q is an integer of from 2 to 14 and R₅ is hydrogen; (C₁-C₄)-alkyl; (C₂-C₆)-alkenyl; or (C₁-C₄)-hydroxyalkyl; 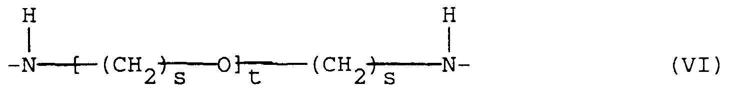 wherein s is an integer of from 2 to 5 and t is an integer of from 1 to 3; 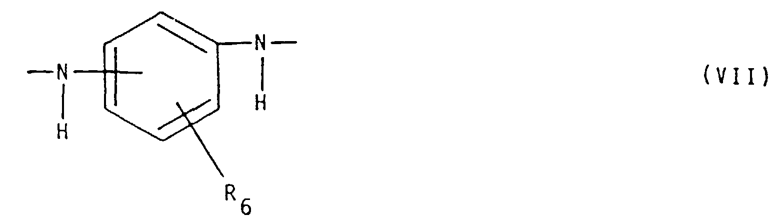 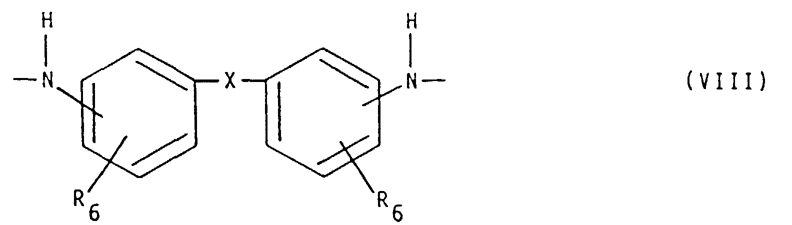 wherein:
X is a direct carbon-carbon bond; O; S; S-S; SO; SO₂; NH; NHSO₂; NHCO; N=N; or CH₂; and
R₆ is hydrogen; hydroxy; (C₁-C₄)-alkyl; or (C₁-C₄)-alkoxy; 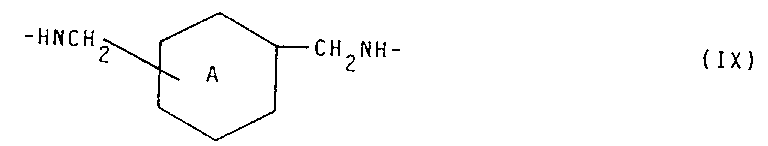 wherein A is a saturated or unsaturated ring; 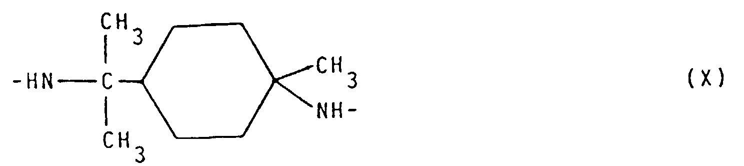 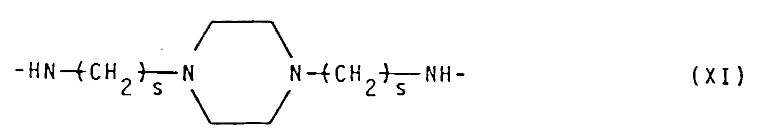 wherein s is an integer of from 2 to 5; 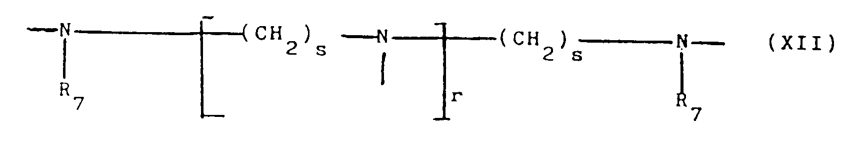 wherein R₇ is hydrogen or (C₁-C₄)-alkyl;
r is an integer of from 1 to 5; and the subscripts s, the same or different from each other, are integers of from 2 to 5; 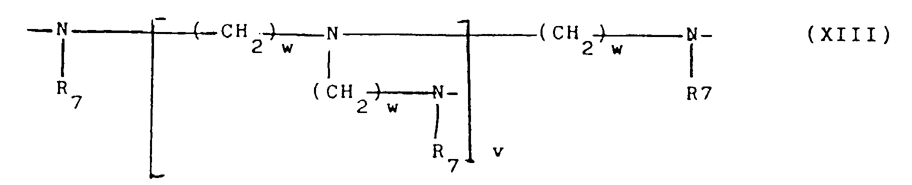 wherein:
R₇ is hydrogen or (C₁-C₄)-alkyl;
w is an integer of from 2 to 4; and
v is 1 or 2.

2. Compositions according to claim 1, wherein R in the general formula (I) is a group of formula
⁅CₘH₂ₘ⁆O-R₂
wherein m is an integer of from 2 to 4 and R₂ is hydrogen or (C₁-C₄)-alkyl.

3. Compositions according to any one of claims 1 and 2, wherein R₁ is hydrogen.

4. Compositions according to any one of the preceding claims, wherein the ammonium phosphates (b) have the general formula (NH₄)ₙ₊₂PₙO₃ₙ₊₁ wherein n is an integer of at least 2 or have the general formula (NH₄PO₃)ₙ wherein n ranges from 50 to 500.

5. Compositions according to any one of claims 1 to 4 wherein the amine phosphates (b) are selected from dimethylammonium phosphate; diethylammonium phosphate; ethylenediamine phosphate; melamine ortho-phosphate; and melamine pyrophosphate.

6. Compositions according to any one of claims 1 to 5, wherein the ammonium phosphonates (b) are the mono- or polysubstituted ones and are selected from salts of mono- and polyphosphonic acids.

7. Compositions according to any one of claims 1 to 6, wherein the polymer (a) is selected from acrylonitrile/ butadiene/styrene terpolymers (ABS); styrene/acrylonitrile (SAN) copolymers; polyurethanes; poly(ethyleneterephthalate) ; poly(butyleneterephthalate); polyamides; and polymers and copolymers of olefins of general formula R'-CH=CH₂ wherein R' is hydrogen, (C₁-C₈)-alkyl or (C₆-C₁₀)-aryl, particularly
(1) HDPE, LLDPE and LDPE polyethylene;
(2) isotactic or prevailingly isotactic polypropylene;
(3) crystalline copolymers of propylene and minor amounts of ethylene and/or other alpha-olefins, such as butene-1, hexene-1, octene-1 and 4-methylpentene-1;
(4) heterophasic compositions comprising (A) a fraction of ethylene or propylene homopolymer or of copolymers as specified under (3) and (B) a copolymeric fraction composed of elastomeric copolymers of ethylene and an alpha-olefin, optionally containing minor amounts of diene, wherein the alpha-olefin is preferably selected from propylene and butene-1;
(5) elastomeric copolymers of ethylene and alpha-olefins optionally containing minor amounts of diene.

8. Molded articles, obtained from the compositions of any one of the preceding claims.

9. Oligomeric 2,4,6-triamino-1,3,5-triazine derivatives having 2 to 50 repeating units of general formula (I) as defined in any one of claims 1 to 3.

## Patentansprüche

1. Selbstverlöschende polymere Zusammensetzungen, umfassend, bezogen auf 100 Gewichtsteile Zusammensetzung:
a) 89 bis 40 Gewichtsteile eines thermoplastischen Polymers und/oder Polymers mit elastomeren Eigenschaften;
b) 8 bis 33 Gewichtsteile eines oder mehrerer Ammonium- und/oder Aminphosphate und/oder -phosphonate;
c) 3 bis 27 Gewichtsteile eines oder mehrerer oligomerer 2,4,6-Triamino-1,3,5-triazin-Derivate mit 2 bis 50 Wiederholungseinheiten der allgemeinen Formel (I): 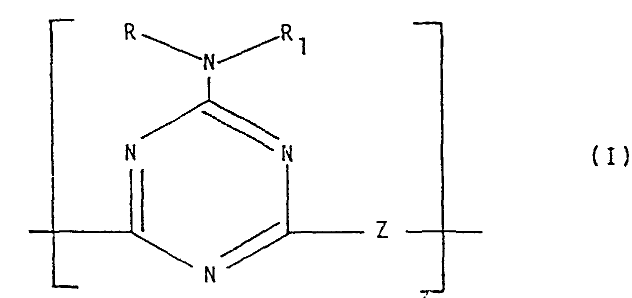 in der:
R für -[-CₘH₂ₘ-]-O-R₂ steht, m eine ganze Zahl von 2 bis 8 ist und R₂ ausgewählt ist aus H; (C₁-C₈)-Alkyl, (C₂-C₈)-Alkenyl; -[-CₚH₂ₚ-]-O-R₃, worin p eine ganze Zahl von 1 bis 4 ist und R₃ für H oder (C₁-C₄)-Alkyl; (C₆-C₁₂)-Cycloalkyl und (C₆-C₁₂)-Alkylcycloalkyl steht;
R₁ für H; (C₁-C₄)-Alkyl oder R steht;
oder R und R₁ beide Wasserstoff sind;
Z ein zweiwertiger oder mehrwertiger Rest ist, der aus denjenigen der folgenden Formeln ausgewählt ist: 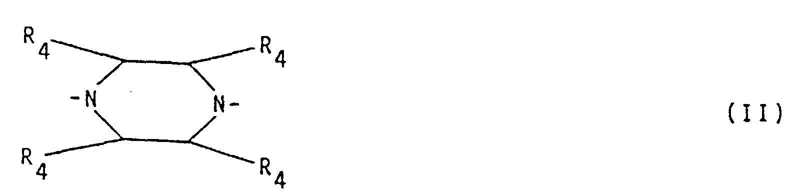 worin die Gruppen R₄, gleich oder voneinander verschieden, Wasserstoff und (C₁-C₄)-Alkyl darstellen; 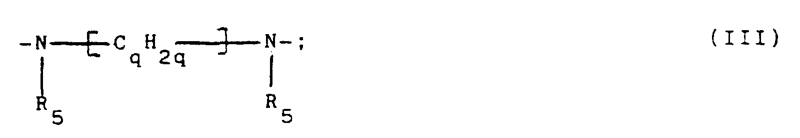 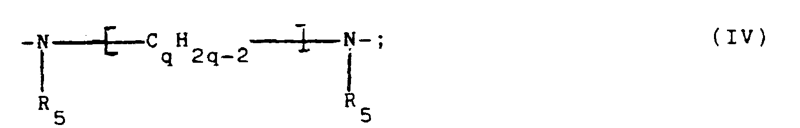 worin q eine ganze Zahl von 2 bis 14 ist und R₅ Wasserstoff; (C₁-C₄)-Alkyl; (C₂-C₆)-Alkenyl; oder (C₁-C₄)-Hydroxyalkyl ist; 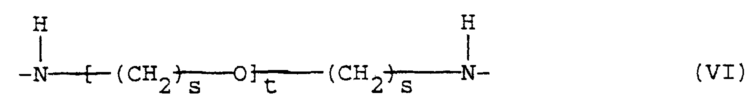 worin s eine ganze Zahl von 2 bis 5 ist und t eine ganze Zahl von 1 bis 3 ist; 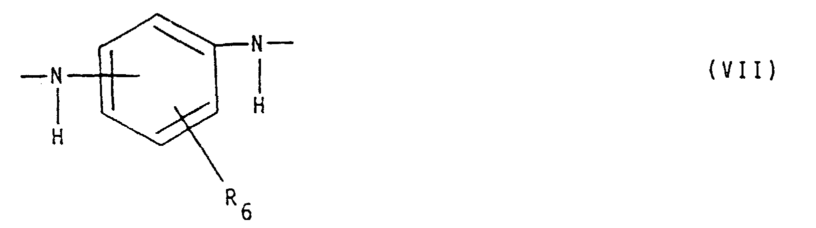 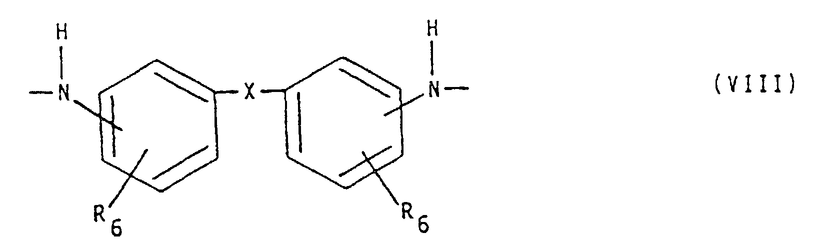 worin:
X eine direkte Kohlenstoff-Kohlenstoff-Bindung; O; S; S-S; SO; SO₂; NH; NHSO₂; NHCO; N=N; oder CH₂ ist; und
R₆ Wasserstoff; Hydroxy; (C₁-C₄)-Alkyl; oder (C₁-C₄)-Alkoxy ist; 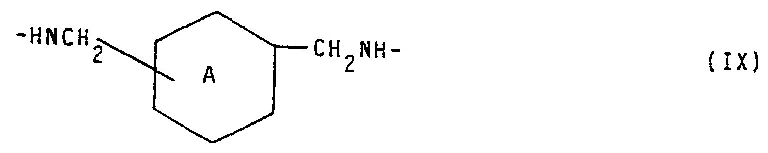 worin A ein gesättigter oder ungesättigter Ring ist; 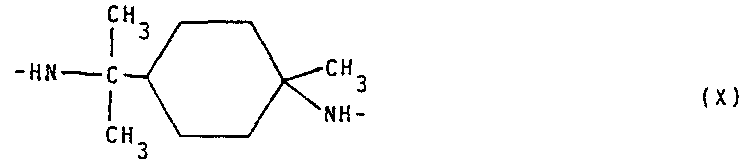 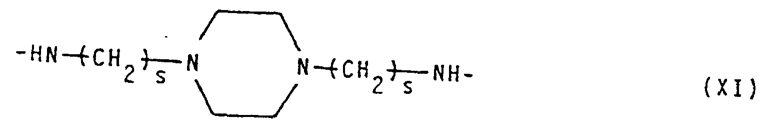 worin s eine ganze Zahl von 2 bis 5 ist; 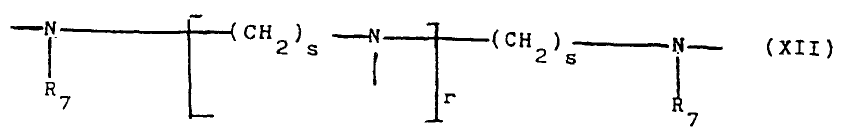 worin R₇ Wasserstoff oder (C₁-C₄)-Alkyl ist;
r eine ganze Zahl von 1 bis 5 ist; und die Indizes s, gleich oder voneinander verschieden, ganze Zahlen von 2 bis 5 sind; 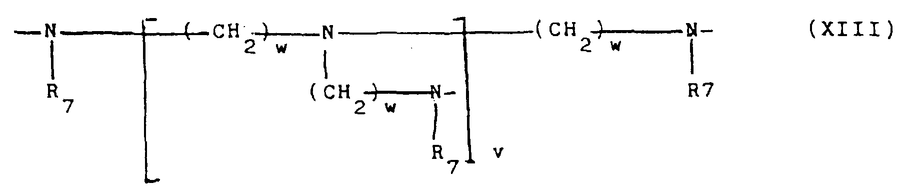 worin
R₇ Wasserstoff oder (C₁-C₄)-Alkyl ist;
w eine ganze Zahl von 2 bis 4 ist; und
v 1 oder 2 ist.

2. Zusammensetzungen nach Anspruch 1, in welchen R in der allgemeinen Formel (I) eine Gruppe der Formel -[-CₘH₂ₘ-]-O-R₂ ist, worin m eine ganze Zahl von 2 bis 4 ist und R₂ Wasserstoff oder (C₁-C₄)-Alkyl ist.

3. Zusammensetzungen nach irgendeinem der Ansprüche 1 und 2, worin R₁ Wasserstoff ist.

4. Zusammensetzungen nach irgendeinem der vorangehenden Ansprüche, worin die Ammoniumphosphate (b) die allgemeine Formel (NH₄)ₙ₊₂PₙO₃ₙ₊₁ aufweisen, in der n eine ganze Zahl von mindestens 2 ist, oder die allgemeine Formel (NH₄PO₃)ₙ aufweisen, worin n im Bereich von 50 bis 500 liegt.

5. Zusammensetzungen nach irgendeinem der Ansprüche 1 bis 4, worin die Aminphosphate (b) aus Diemethylammoniumphosphat; Diethylammoniumphosphat; Ethylendiaminphosphat; Melamin-ortho-phosphat; und Melaminpyrophosphat ausgewählt sind.

6. Zusammensetzungen nach irgendeinem der Ansprüche 1 bis 5, worin die Ammoniumphosphonate (b) mono- oder polysubstituiert sind und aus Salzen von Mono- und Polyphosphonsäuren ausgewählt sind.

7. Zusammensetzungen nach irgendeinem der Ansprüche 1 bis 6, worin das Polymer (a) aus Acrylnitril/Butadien/Styrol-Terpolymeren (ABS); Styrol/Acrylnitril (SAN)-Copolymeren; Polyurethanen; Poly(ethylenterephthalat); Poly(butylenterephthalat); Polyamiden; und Polymeren und Copolymeren von Olefinen der allgemeinen Formel R'-CH=CH₂ ausgewählt ist, worin R' Wasserstoff, (C₁-C₈)-Alkyl oder (C₆-C₁₀)-Aryl ist, insbesondere
(1) HDPE-, LLDPE- und LDPE-Polyethylen;
(2) isotaktischem oder vorwiegend isotaktischem Polypropylen;
(3) kristallinen Copolymeren von Propylen und geringeren Mengen an Ethylen und/oder anderen alpha-Olefinen, wie Buten-1, Hexen-1, Octen-1, 4-Methylpenten-1;
(4) heterophasischen Zusammensetzungen, die (A) eine Fraktion von Ethylen- oder Propylen-Homopolymer oder die unter (3) angegebenen Copolymere und (B) eine copolymere Fraktion umfassen, die aus elastomeren Copolymeren von Ethylen und einem alpha-Olefin zusammengesetzt ist, welche gegebenenfalls kleinere Mengen an Dien enthalten, wobei das alpha-Olefin vorzugsweise aus Propylen und Buten-1 ausgewählt ist.
(5) elastomeren Copolymeren von Ethylen und alpha-Olefinen, gegebenenfalls kleinere Mengen an Dien enthaltend.

8. Formkörper, erhalten aus den Zusammensetzungen nach irgendeinem der vorangehenden Ansprüche.

9. Oligomere 2,4,6-Triamino-1,3,5-triazin-Derivate mit 2 bis 50 Wiederholungseinheiten der allgemeinen Formel (I), wie in irgendeinem der Ansprüche 1 bis 3 definiert.

## Revendications

1. Compositions auto-extinguibles à base de polymère, qui comprennent, pour 100 parties en poids de composition :
a) 89 à 40 parties en poids de polymère thermoplastique et/ou de polymère ayant des propriétés élastomères,
b) 8 à 33 parties en poids d'un ou plusieurs phosphates et/ou phosphonates d'ammonium et/ou d'amine,
c) 3 à 27 parties en poids d'un ou plusieurs dérivés oligomères de 2,4,6-triamino-1,3,5-triazine, possédant 2 à 50 motifs de formule générale (I) : 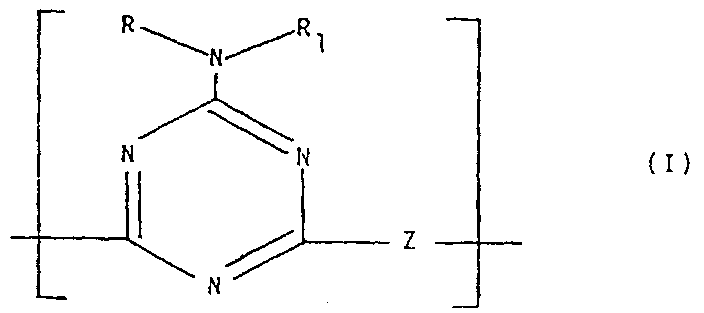 dans laquelle R représente un groupe de formule :
-[-CₘH₂ₘ-]-O-R₂,
dans laquelle m désigne un nombre entier ayant une valeur de 2 à 8 et R₂ représente un atome d'hydrogène, un groupe alkyle en C₁ à C₈, un groupe alcényle en C₂ à C₈ ou un groupe de formule :
-[-CₚH₂ₚ-]-O-R₃,
dans laquelle p désigne un nombre entier ayant une valeur de 1 à 4, et R₃ représente un atome d'hydrogène, un groupe alkyle en C₁ à C₄, un groupe cycloalkyle en C₆ à C₁₂ ou un groupe alkylcycloalkyle en C₆ à C₁₂,
R₁ représente un atome d'hydrogène, un groupe alkyle en C₁ à C₄ ou R, où bien R et R₁ représentent tous deux des atomes d'hydrogène,
Z représente un radical divalent ou polyvalent choisi parmi ceux de formules suivantes : 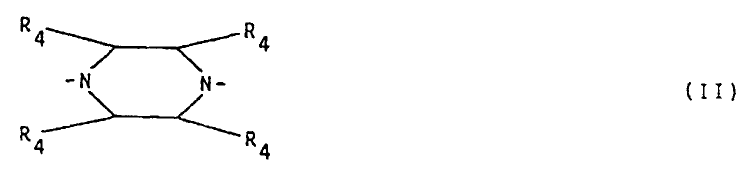 dans laquelle les groupes R₄ sont identiques ou différents et représentent chacun un atome d'hydrogène ou un groupe alkyle en C₁ à C₄ ; 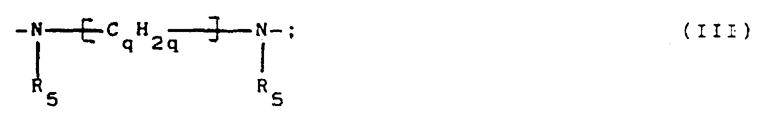 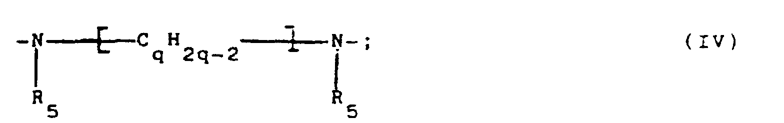 dans lesquelles q désigne un nombre entier ayant une valeur de 2 à 14 et R₅ représente un atome d'hydrogène, un groupe alkyle en C₁ à C₄, un groupe alcényle en C₂ à C₆, ou un groupe hydroxyalkyle en C₁ à C₄, 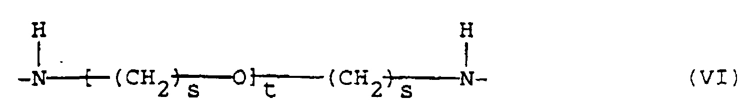 dans laquelle s désigne un nombre entier ayant une valeur de 2 à 5 et t désigne un nombre entier ayant une valeur de 1 à 3 ; 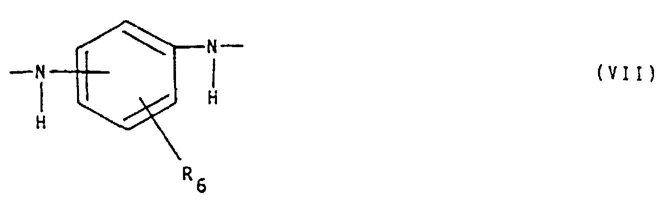 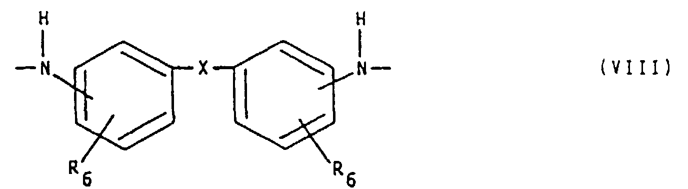 dans lesquelles X représente une liaison directe carbone-carbone, O, S, S-S, SO, SO₂, NH, NHSO₂, NHCO, N=N ou CH₂, et R₆ représente un atome d'hydrogène, un groupe hydroxyle, un groupe alkyle en C₁ à C₄ ou un groupe alcoxy en C₁ à C₄, 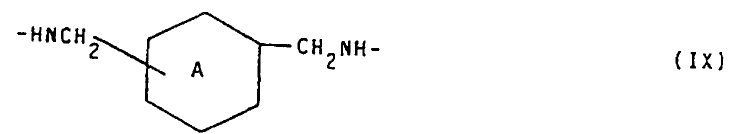 dans laquelle A représente un noyau saturé ou insaturé, 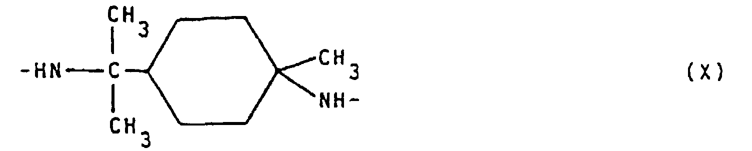 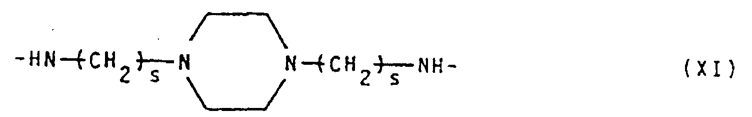 dans laquelle s désigne un nombre entier ayant une valeur de 2 à 5 ; 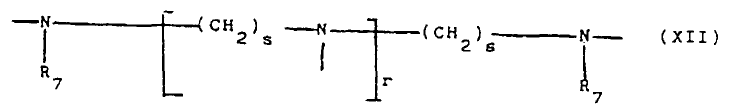 dans laquelle R₇ représente un atome d'hydrogène ou un groupe alkyle en C₁ à C₄, r désigne un nombre entier ayant une valeur de 1 à 5 et les indices s qui sont identiques ou différents, représentent des nombres entiers ayant une valeur de 2 à 5 ; 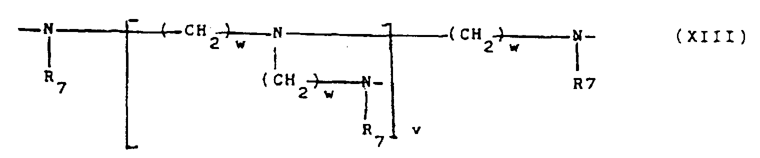 dans laquelle R₇ représente un atome d'hydrogène ou un groupe alkyle en C₁ à C₄, w désigne un nombre entier ayant une valeur de 2 à 4 et v est égal à 1 ou 2.

2. Compositions selon la revendication 1, pour lesquelles R de la formule générale (I) est un groupe de formule -[-CₘH₂ₘ-]O-R₂, dans laquelle m désigne un nombre entier ayant une valeur de 2 à 4 et R₂ représente un atome d'hydrogène ou un groupe alkyle en C₁ à C₄.

3. Compositions selon la revendication 1 ou 2, pour lesquelles R₁ représente un atome d'hydrogène.

4. Compositions selon l'une quelconque des revendications précédentes, pour lesquelles les phosphates d'ammonium (b) ont la formule générale (NH₄)ₙ₊₂PₙO₃ₙ₊₁ dans laquelle n désigne un nombre entier ayant une valeur d'au moins 2, ou ont la formule générale (NH4P03)n dans laquelle n désigne un nombre compris dans l'intervalle allant de 50 à 500.

5. Compositions selon l'une quelconque des revendications 1 à 4, pour lesquelles les phosphates d'amine (b) sont choisis parmi le phosphate de diméthylammonium, le phosphate de diéthylammonium, le phosphate d'éthylènediamine, l'ortho-phosphate de mélamine et le pyrophosphate de mélamine.

6. Compositions selon l'une quelconque des revendications 1 à 5, pour lesquelles les phosphonates d'ammonium (b) sont les phosphonates mono- ou poly-substitués et sont choisis parmi les sels des acides mono- et polyphosphoniques.

7. Compositions selon l'une quelconque des revendications 1 à 6, pour lesquelles le polymère (a) est choisi parmi les terpolymères acrylonitrile/butadiène/styrène (ABS), les copolymères styrène/acrylonitrile (SAN), les polyuréthannes, les poly(téréphtalate d'éthylène), les poly(téréphtalate de butylène), les polyamides, et les polymères et copolymères d'oléfines de formule générale R'-CH=CH₂ dans laquelle R' représente un atome d'hydrogène, un groupe alkyle en C₁ à C₈ ou un groupe aryle en C₆ à C₁₀, en particulier :
(1) le polyéthylène HDPE, LLDPE ou LDPE,
(2) le polypropylène isotactique ou à prédominance isotactique,
(3) les copolymères cristallins de propylène et de quantités mineures d'éthylène et/ou d'autres alpha-oléfines telles que le butène-1,l'hexène-1, l'octène-1 et le méthyl-4-pentène-1,
(4) les compositions à plusieurs phases, comprenant :
(A) une fraction constituée d'un homopolymère d'éthylène ou de propylène ou de copolymères semblables à ceux indiqués dans la partie (3), et
(B) une fraction copolymère constituée de copolymères élastomères d'éthylène et d'une alpha-oléfine choisie de préférence parmi le propylène et le butène-1, contenant éventuellement des proportions mineures de diène,
(5) les copolymères élastomères d'éthylène et d'alpha-oléfines, contenant éventuellement des proportions mineures de diène.

8. Articles moulés, obtenus à partir des compositions selon l'une quelconque des revendications précédentes.

9. Dérivés oligomères de 2,4,6-triamino-1,3,5-triazine contenant 2 à 50 motifs de formule générale (I) telle que définie dans l'une quelconque des revendications 1 à 3.
